# EUROPEAN PATENT APPLICATION

(11) **EP 2 138 851 A1**
(43) Date of publication of application: **30.12.2009**
(21) Application number: 09008083.9
(22) Date of filing: 19.06.2009
(51) Int. Cl.: G01P 15/12, G01P 15/18

(54) **Micro electro mechanical systems element for measuring three-dimensional vectors**

(30) Priority: 25.06.2008 JP 2008165473
(71) Applicant: Yamaha Corporation, Hamamatsu-shi, Shizuoka-ken (JP)
(72) Inventor: Hattori, Atsuo, Hamamatsu-shi, Shizuoka-ken (JP)
(74) Representative: Emde, Eric

(57) **Abstract**

Provided that an x-axis, a y-axis and a z-axis are three axes of a rectangular coordinate system, a micro electro mechanical systems element comprises a support section whose length in the y-direction is shorter than a length in the x-direction, parallel arranged two film-like beam sections whose length in the y-direction is shorter than a length in the x-direction, a weight section, whose length in the y-direction is shorter than a length in the x-direction, spanning centers of the two beam sections and comprising a connecting part spanning the two beam sections, two projection parts projecting to opposite directions from the connecting part in a space between the two beam sections, and a plurality of distortion detectors which are placed on each beam section and detect distortion corresponding to deformation of the beam sections to measure xyz components of a vector corresponding to force acting on the weight section.

## Description

### CROSS REFERENCE TO RELATED APPLICATION

This application is based on Japanese Patent Application 2008-165473, filed on June 25, 2008, the entire contents of which are incorporated herein by reference.

### BACKGROUND OF THE INVENTION

### A) FIELD OF THE INVENTION

This invention relates to a micro electro mechanical systems (MEMS) element and more specifically to a MEMS element for measuring three-dimensional vectors such as acceleration, angular velocity, etc.

### B) DESCRIPTION OF THE RELATED ART

Conventionally a micro electro mechanical systems (MEMS) element that function as a motion sensor for measuring acceleration, angular velocity, vibration directions, etc. are well known. Japanese Laid-open Patent No. H11-44705 and Japanese Laid-open Patent No. 2007-3211 disclose an acceleration sensor comprising a support section having a square frame shape, two beam sections placed in parallel with each other to the support section and a weight section placed in the center of two beam section. It is preferable for a motion sensor measuring three-dimensional vectors such as acceleration, angular velocity and vibration directions to design shapes of the beam sections and the weight section to have same sensitivities for three axes. Conventionally the beam sections and the weight section have been designed to match the square frame shaped support section.

However, a shape of the support section constituting an outline shape of a die and shapes of the beam sections and the weight section define number of MEMS elements which can be placed on a wafer so that the shapes will affect a manufacturing cost.

### SUMMARY OF THE INVENTION

It is an object of the present invention to miniaturize micro electro mechanical system for measuring three-dimensional vectors.

It is an object of the present invention to reduce a manufacturing cost of micro electro mechanical system for measuring three-dimensional vectors.

According to one aspect of the present invention, there is provided a micro electro mechanical systems element wherein an x-axis, a y-axis and a z-axis are three axes of a rectangular coordinate system, the micro electro mechanical systems element comprising: a support section whose length in the y-direction is shorter than a length in the x-direction; two beam sections whose length in the y-direction is shorter than a length in the x-direction, each beam section being a film spanning the support section in the x-direction and arranged in parallel to the other beam section; a weight section whose length in the y-direction is shorter than a length in the x-direction and which spans centers of the two beam sections, the weight section comprising a connecting part spanning the two beam sections, two projection parts projecting to opposite directions from the connecting part in a space between the two beam sections; and a plurality of distortion detectors which are placed on each beam section and detect distortion corresponding to deformation of the beam sections to measure xyz components of a vector corresponding to force acting on the weight section.

According to the present invention, in order to largely improve sensitivity by increasing cubic volume and mass of a weight section, two projecting parts are projecting to opposite directions from a connecting part of a weight section, which spans two beam sections at their center parts, and the weight section uses a space between the beam sections. Moreover, a structure wherein a weight section spans the centers of two beam sections that are long in an x-direction and short in a y-direction can make it possible to control relative sensitivities of three axes to be equal to each another even if the weight section is long in an x-direction and short in a y-direction. Therefore, micro electro mechanical systems (MEMS) element can be miniaturized by setting length of a support section in the y-direction, which is a direction of alignment of the parallel placed beam sections, to be shorter than that in the x-direction. As a result, number of the MEMS elements which can be configured to one substrate at manufacturing steps will be increased, and a manufacturing cost can be reduced. In this specification the xyz rectangular coordinate system is defined as that a direction in a thickness of the beam sections is a z-direction and a direction in which the beam sections are aligned is the y-direction for convenience of explanation.

### BRIEF DESCRIPTION OF THE DRAWINGS

FIG. 1A is a plan view of an acceleration sensor 1 according to a first embodiment of the present invention.
FIG. 1B to FIG. 1D are cross sectional views of the acceleration sensor 1 according to the first embodiment.
FIG. 2 is a plan view of the acceleration sensor 1 showing a configuration example of piezoresistance elements 40 for measuring xyz components of acceleration according to the first embodiment.
FIG. 3A is a plan view of an angular velocity sensor 2 according to a second embodiment of the present invention.
FIG. 3B is a cross sectional view of the angular velocity sensor 2 according to the second embodiment of the present invention.

### DETAILED DESCRIPTION OF THE PREFERRED EMBODIMENTS

First and second embodiments of the present invention will be explained with reference to drawings. Similar components in the drawings are represented by the same reference numbers, and explanations of them will be omitted.

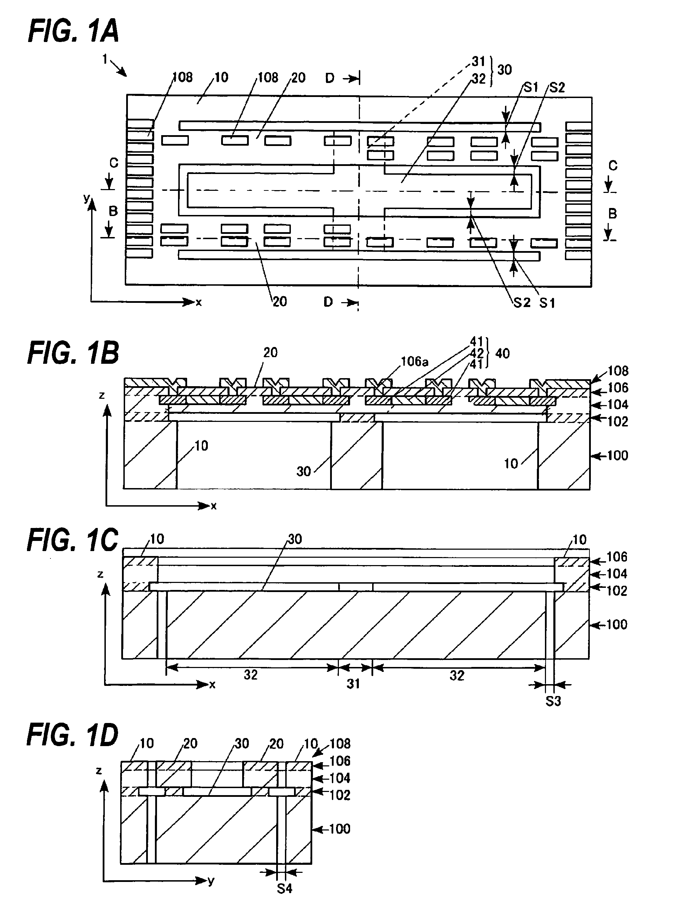

FIG. 1A is a plan view of an acceleration sensor 1 according to a first embodiment of the present invention. In FIG. 1A broken lines show hidden parts of an outline of a weight section 30, and details of wiring section 108 are omitted. FIG. 1B to FIG. 1D are cross sectional views of the acceleration sensor 1 cut across a line BB, a line CC and a line DD respectively in FIG. 1. In FIG. 1B to FIG. 1D bold lines show boundaries of a support section 10, beams 20, the weight section 30 and piezoresistance elements R, and broken lines show boundaries of layers formed in a manufacturing processes. The acceleration sensor 1 according to the first embodiment is formed as described below to be miniaturized and to reduce a manufacturing cost.

The acceleration sensor 1 is a multi-layer structure that functions as a micro electro mechanical systems (MEMS) element including a substrate layer 100, an etch stopper layer 102, a semiconductor layer 104, an insulating layer 106 and a wiring layer 108. For example, the substrate layer 100 is formed of monocrystalline silicon (Si) with a thickness of 625µm, the etch stopper layer 102 is formed of silicon dioxide (SiO₂) with a thickness of 1µm, the semiconductor layer 104 is formed of monocrystalline silicon (Si) with a thickness of 9.5µm, the insulating layer 106 is formed of silicon dioxide (SiO₂) with a thickness of 0.5µm, and the wiring layer 108 is formed of aluminum (A1), copper (Cu) or aluminum-silicon (A1-Si) alloy with a thickness of 0.3µm.

Those layers constituting the acceleration sensor 1 constitute the frame-shaped support section 10, the two beam sections 20 spanning inside of the frame-shaped support section 10 and the weight section 30 spanning the two beam sections 20. Hereinafter, in this specification, the xyz rectangular coordinate system is defined by defining a direction in parallel to a direction in which the beam sections 20 span (a long side of the beam sections 20) as an x-axis, a direction (a short side of the beam sections 20) crossing the x-axis at right angles as a y-axis, and a direction of the thickness of the beam sections (the thickness of the semiconductor layer 104) as a z-axis.

The support section 10 has a frame structure (a structure surrounding a particular space) which is a rectangle wherein inner and outer outlines are long in the x-direction and short in the y-direction when viewed from the z-direction. That is, the support section 10 is a structure functioning as a rigid-body by connecting two short rectangular parallelepipeds which are long in the y-direction (a direction in which two beam sections 20 are aligned) and short in the x-direction by using two long rectangular parallelepipeds which are long in the x-direction (a longitudinal direction of the beam sections 20). Moreover, the support section 10 has enough thickness to be considered as a rigid-body as far as being used in the acceleration sensor 1.

The beam sections 20 that are parallel to each other span inside the support section 10 in parallel to the x-direction for maintaining sensitivity of the acceleration sensor 1 for xyz axes on condition that the support section 10 is a rectangle frame. Both ends of each beam section 20 are fixed to the support section, and each beam section 20 is a thin film that is thin in the z-direction. Each beam section 20 is a thin structure which can be considered as an elastic-body as far as being used as the acceleration sensor 1. A width (length in the y-direction) of each slit S1 formed between the support section 10 and each beam section 20 is set to be as narrow as possible in manufacturing processes. Each beam section 20, when viewed from the z-direction, is short in the y-direction and long in the x-direction. Therefore, the beam sections 20 are bent easily to the z-direction by inertial force which moves the weight section 30 to the z-direction or by inertial force which rotates the weight section 30 around the y-axis. A width (length in the y-direction) of each slit S2 formed between each beam section 20 and the weight section 30 is set to be as narrow as possible in manufacturing processes. Moreover, an interval between the two beam sections 20 is sufficiently shorter than the length of the beam section 20 in the x-direction and the length of the weight section 30 in the x-direction, and the length (width) of each beam section 20 in the y-direction is sufficiently shorter than the length of each beam section 20 in the x-direction. Therefore, the beam sections 20 are bent easily to the z-direction and twisted easily around the x-axis by inertial force in the y-direction which rotates the weight section 30 around the x-axis.

The weight section 30 is placed inside the support section 10. The weight section 30 is a cross-shaped column which is long in the x-direction and short in the y-direction when viewed from the z-direction and spans the centers of the two beam sections 20 for maintaining sensitivity, for the xyz axes, of acceleration measured in accordance with deformation of the two beam sections 20 in parallel to each other. The closest distance S3 in the x-direction and the closest distance S4 in the y-direction between the support section 10 and the weight section 30 are set to be in a range within which the support section 10 and the weight section 30 are not contacted with each other when the acceleration sensor 1 is used. The weight section 30 is a structure having a connecting part 31 and two projecting parts 32 and does not deform substantially. That is, the weight section 30 can be considered as a thick rigid-body as far as being used in the acceleration sensor 1.

The connecting part 31 is longer than the interval between the two beam sections 20 in the y-direction and is a part spanning (or connecting) two beam sections 20. The etch stopper layer 102 of the connecting part 31 directly connects with the semiconductor layers 104 of the two beam sections 20. The remaining parts when the connecting part 31 is removed from the weight section 30 are the projecting parts 32.

The projecting parts 32 are placed in the interval between the two beam sections 20 when viewed from the z-direction. The projecting parts 32 are shorter than the interval between the two beam sections 20 in the y-direction and are projecting to opposite directions from each other from the y-direction center of the connecting part 31 in parallel to the x-axis. The larger the mass of the weight section 30 becomes, the larger the inertial force acting on the weight section 30 in accordance with acceleration becomes; therefore, deformation of the beam sections 20 will be larger by adding the projecting parts 32 in the interval between the beam sections 20. The longer the length in the x-direction of the projecting parts 32 is, the easier the weight section 30 rotates around the y-axis.

The center of gravity of the weight section 30 is at the center of the weight section 30 in the x-direction and the y-direction and approximately at the center of the weight section 30 in the z-direction. That is, in the z-direction, the center of gravity of the weight section 30 is at a distance from the beam sections 20. The further the center of gravity of the weight section 30 is from the beam sections 20, the easier the weight section 30 rotates around the x-axis and the y-axis.

A plurality of the piezoresistance elements 40 as a distortion detector are formed on each beam sections 20 for measuring xyz components of acceleration in accordance with deformation of the two parallel-configured beam sections 20. Because distortion of the beam sections 20 when each beam section 20 deforms in accordance with inertial force acting on the weight section 30 concentrates on the vicinities of the support section 10 and the weight section 30, which are rigid bodies, each piezoresistance element 40 are placed in the vicinity of the support section 10 or the weight section 30. The piezoresistance element 40 is an element wherein low-resistance connecting parts 41 are combined at both ends of piezoresistance part 42. The piezoresistance part 42 and the low-resistance connecting parts 41 are formed by implanting impurity ions such as boron (B), etc. to the semiconductor layer 104 to have a predetermined resistance. Higher concentration impurity ions are implanted to the low-resistance connecting parts 41 than to the piezoresistance part 42 in order to improve contact between the piezoresistance part 42 and the wiring layer 108.

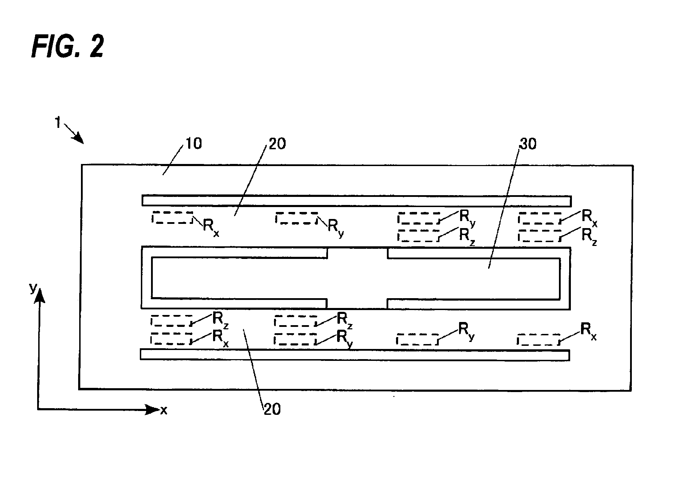

FIG. 2 is a plan view of the acceleration sensor 1 showing an arrangement example of the piezoresistance elements 40 for measuring xyz components of acceleration with broken lines. For measuring three-dimensional acceleration, that is, for measuring xyz components of acceleration, a unit of four piezoresistance elements is required for each of xyz components; therefore, a total of 12 piezoresistance elements R are arranged on the beam sections 20. In each unit, the piezoresistance elements R are wired to form a bridge circuit independently from the other units.

The four piezoresistance elements R for detecting the x component of acceleration are arranged and wired to obtain an output corresponding to deformation of bendable regions of the beam sections 20 when the bendable regions are bent up in opposite directions to each other in the z-direction. The bendable regions are positioned on both sides of the connecting part 31 of the weight section 30.

The four piezoresistance elements R for detecting the y component of acceleration are arranged and wired to obtain an output corresponding to deformation of the beam sections 20 as a whole when the beam sections are bent up in opposite directions to each other in the z-direction. When the two beam sections 20 as a whole bends up in opposite directions to each other in the z-direction, each beam section 20 twists around the x-axis; therefore, the four piezoresistance elements R for detecting the y component of acceleration are preferably arranged onto a part where distortion caused by the twist of the beam section 20 around the x-axis is concentrated.

The four piezoresistance elements R for detecting the z component of acceleration are arranged and wired to obtain an output corresponding to deformation of the beam sections 20 as a whole when the beam sections are bent up in one direction in the z-direction.

A manufacturing process for the acceleration sensor 1 according to the first embodiment will be explained below.

A wafer to be a substrate layer 100 which is the thickest layer is used as a substrate on which films are deposited. The support section 10, the weight section 30, the beam sections 20, the piezoresistance elements 40 and the wiring layer 108 for each one of a plurality of the acceleration sensors 1 are formed on one of two main surface of the substrate by depositing films, patterning the deposited films and the substrate with photolithography techniques and implanting impurity ions to the semiconductor layer 104.

Although those processes are well known as disclosed in Japanese Laid-Open Patent No.H11-44705, Japanese Laid-Open Patent No.2007-3211, etc. and explanations for the details of the processes will be omitted in this specification, for example, the substrate layer 100, the etch stopper layer 102 and the semiconductor layer 104 are made of a silicon on insulator (SOI) substrate. The thinner silicon layer of the SOI substrate is defined as the semiconductor layer 104. Impurity ions are implanted to the silicon layer for forming the piezoresistance elements R and thereafter a surface of the silicon layer is thermal oxidized to form the insulating layer 106. The beam section 20 are formed by selectively etching the semiconductor layer 104 and the insulating layer 106 to the etch stopper layer 102. The substrate layer 100 is patterned by repeating etching to the etch stopper layer 102 and protecting side walls in short cycles (e.g., deep-RIE, so-called Bosch process, etc.). Unnecessary parts of the etch stopper layer 102 are etched by using the remaining substrate layer 100 as a mask after patterning both ends of the etch stopper layer 102.

After those wafer processes, an outer outline of the support section 10 is formed by cutting the substrate and the deposited films with a rotating blade of a dicer so that a plurality of the acceleration sensors 1 can be obtained from one substrate. At this time, the smaller a size of the outline of the support section 10 viewed from the z-direction (i.e., the outline of each support section 10 viewed from a direction of thickness of the wafer which is the substrate for depositing the films) becomes, the larger number of the acceleration sensors 1 can be obtained from one substrate.

For increasing number of layout of the support sections 10 for one substrate in the manufacturing processes of the acceleration sensors 1 which are laminated bodies, a length of the outline of each acceleration sensor 1 in one direction (for example, the y-direction) viewed from the thickness direction of the substrate is made to be short. Therefore, in this embodiment, the length of the support section 10 in the y-direction is set to be short. Moreover, the sensitivity for each of xyz axes is improved by placing projecting parts 32 of the weight section 30 in the space between the two beam sections 20. Furthermore, for maintaining the sensitivities for the xyz axes similar to each another, the two beam sections 20 are arranged to be parallel to each other, the interval of the two beam section 20 are made to be narrow, each beam section 20 is set to be long in the x-direction and short in the y-direction, and the weight section 30 is also set to be long in the x-direction and short in the y-direction.

Moreover, in this embodiment, the number of the slits S1 and S2 extending in the x-direction between the beam sections 20 and between the support section 10 and the weight section 30 is a total of four. This number is set to minimize the length of the support section 10 in the y-direction. That is, the z-direction which is the thickness direction of the substrate agrees with a direction of incident light for exposing a mask at the photolithography process so that margins corresponding to resolution and positioning precision are added up to the outline size of the support section 10 in accordance with the number of the slits when designing the outline size of the support section 10 in the y-direction that is perpendicular to the z-direction.

Furthermore, according to this embodiment, the sensitivities are improved by placing the projecting parts 32 of the weight section 30 in the space between the two beam sections 20 while the weight section 30 is not placed in each space between the support section 10 and the beam section 20 (the slit S1); therefore, the number of the slits arranged in parallel to the y-direction and extending to the x-direction viewed from the thickness direction of the substrate (the z-direction) is minimized. Assuming that the projecting parts 32 are added to each space between the support section 10 and the beam section 20, the number of the slits arranged in parallel to the y-direction and extending to the x-direction viewed from the thickness direction of the substrate (the z-direction) would be six.

Moreover, in a packaging process of the acceleration sensor 1, a package size can be decreased in accordance with the size of the acceleration sensor 1, and other die (e.g., a die that functions as other types of sensors or a signal processor) having a rectangular bottom outline similar to the acceleration sensor 1 can be attached to a square bottom surface of the package.

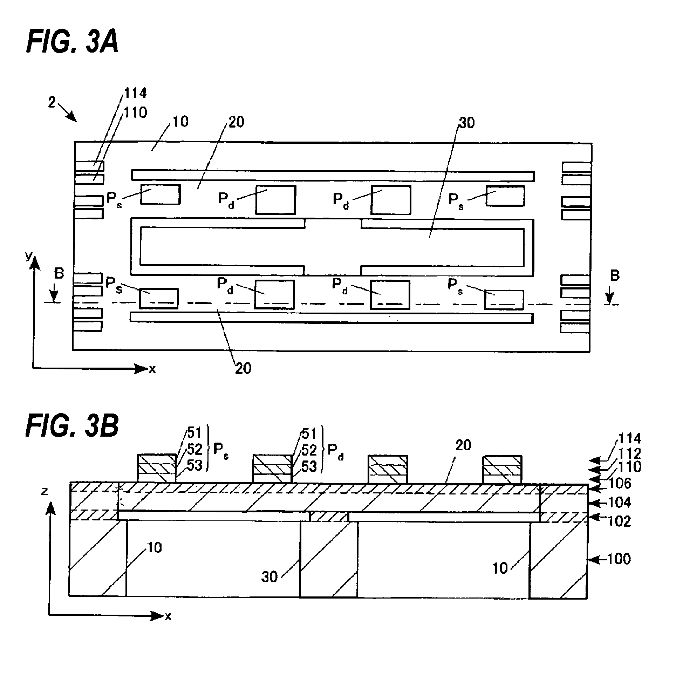

FIG. 3A is a plan view of an angular velocity sensor 2 according to a second embodiment of the present invention, and FIG. 3B is a cross sectional view of the angular velocity sensor 2 according to the second embodiment of the present invention. In FIG. 3A, detailed lines of wiring layers 110 and 114 are omitted. In FIG. 3B which shows a cross section cut in a line B-B shown in FIG. 3A, bold lines represent boundaries of the support section 10, the beam sections 20, the weight section 30, and piezoelectric elements P, and broken lines represent boundaries of each layer laminated in a manufacturing processes.

The angular velocity sensor 2 is a MEMS element functioning as a vibrating gyroscope for xyz components of angular velocity. A plurality of piezoelectric elements Pd are placed on each beam section 20 as driving means for rotating the weight section 30. Moreover, a plurality of piezoelectric elements Ps are placed on each beam section 20 as detecting means for detecting distortion of the beam sections 20 corresponding to very weak Coriolis force acting on the weight section 30.

Each of the piezoelectric elements Pd as the driving means and the piezoelectric elements Ps as the detecting means consists of a lower layer electrode 53, piezoelectric body 52 and an upper layer electrode 51. The lower wiring layer 110 laminated on a surface of the insulating layer 106 forms the lower layer electrodes 53, connecting pads and wirings (not shown in the drawings). For example, the lower wiring layer 110 has a thickness of 0.1 µm and is formed of platinum (Pt). A piezoelectric layer 112 laminated on a surface of the lower wiring layer 110 forms the piezoelectric bodies 52. For example, the piezoelectric layer 112 has a thickness of 3 µm and is formed of lead zirconate titanate (PZT). The upper wiring layer 114 laminated on a surface of the piezoelectric layer 112 forms the upper layer electrodes 51, connecting pads and wirings (not shown in the drawings). For example, the upper wiring layer 114 has a thickness of 0.1 µm and is formed of platinum (Pt).

While alternating current voltages which are independent from each another are applied to the plurality of the piezoelectric elements Pd as driving means to oscillate and rotate the weight section 30, an output signal is obtained from each piezoelectric element Ps as detecting means. Signals corresponding to the xyz components of angular velocity can be obtained by removing oscillation component from the output signals obtained from the piezoelectric elements Ps. In order to efficiently detect twist of the beam sections 20 around the x-axis by the piezoelectric elements Ps as detecting means and to cancel twist component out by adding outputs of two piezoelectric elements Ps, the piezoelectric elements Ps are preferably arranged in positions diverged from the y-direction's center of the beam section 20. Moreover, the positions of the piezoelectric elements Pd and the piezoelectric elements Ps can be exchanged.

The present invention has been described in connection with the preferred embodiments. The invention is not limited only to the above embodiments. It is apparent that various modifications, improvements, combinations, and the like can be made by those skilled in the art.

For example, the present invention can be adapted to a MEMS element which functions as a motion sensor for measuring acceleration and angular velocity, a motion sensor for measuring a vibrating direction, a vibrating type acceleration sensor, a vibrating type microphone and a force sensor.

Moreover, for example, a part or the entire substrate layer 100 may be made of metal for increasing the mass of the weight section 30, or the weight section 30 may be formed of a deposition film instead of bulk material. Furthermore, the acceleration sensor 1 and the angular velocity sensor 2 may be manufactured by using direct bonding of a glass wafer to be the weight section 30 and a silicon wafer to be the beam sections 20.

Moreover, for example, the beam sections 20 may span two independent bodies of the support sections. In this case, the two support sections are arranged to make a y-direction length of a rectangular xy region including the two support sections shorter than an x-direction length. Moreover, in this case, a structure for fixing the two support sections not to move fixed ends of the beam sections 20 by tension acting on the beam sections 20.

## Claims

1. A micro electro mechanical systems element wherein an x-axis, a y-axis and a z-axis are three axes of a rectangular coordinate system, the micro electro mechanical systems element comprising:
a support section whose length in the y-direction is shorter than a length in the x-direction;
two beam sections whose length in the y-direction is shorter than a length in the x-direction, each beam section being a film spanning the support section in the x-direction and arranged in parallel to the other beam section;
a weight section whose length in the y-direction is shorter than a length in the x-direction and which spans centers of the two beam sections, the weight section comprising a connecting part spanning the two beam sections, two projection parts projecting to opposite directions from the connecting part in a space between the two beam sections; and
a plurality of distortion detectors which are placed on each beam section and detect distortion corresponding to deformation of the beam sections to measure xyz components of a vector corresponding to force acting on the weight section.

2. The micro electro mechanical systems element according to claim 1, wherein the weight section is a cross-shaped when viewed from the z-direction.
